# EUROPEAN PATENT APPLICATION

(11) **EP 4 428 678 A1**
(43) Date of publication of application: **11.09.2024**
(21) Application number: 23174006.9
(22) Date of filing: 17.05.2023
(51) Int. Cl.: G06F 8/61, G06F 11/14

(54) **CONFIRMING INSTALLATION OF NEW NETWORK DEVICE SOFTWARE FOR A NETWORK DEVICE**

(30) Priority: 08.03.2023 US 202318180549
(71) Applicant: Juniper Networks, Inc., Sunnyvale, CA 94089 (US)
(72) Inventor: SUBBAIAH, Polisetty Rama, Sunnyvale, 94089 (US)
(74) Representative: D Young & Co LLP

(57) **Abstract**

A network device may receive new network device software and may receive an option to wait a predetermined period of time for confirmation of installation of the new network device software. The network device may determine, based on the option, whether the confirmation of installation of the new network device software is received prior to expiration of the predetermined period of time. The network device may selectively perform an automatic rollback to previous network device software based on failing to receive the confirmation of installation of the new network device software prior to expiration of the predetermined period of time, or utilize the new network device software based on receiving the confirmation of installation of the new network device software prior to expiration of the predetermined period of time.

## Description

### BACKGROUND

A network operating system executing on a network device (e.g., a router, a switch, and/or the like) enables users to perform a software upgrade or a software downgrade of the network operating system with various user interfaces, such as a command line interface (CLI), an extensible markup language (XML) remote procedure call (RPC) mechanism, and/or the like.

### SUMMARY

Particular embodiments are set out in the independent claims. Various optional examples are set out in the dependent claims. Some implementations described herein relate to a method. The method may include receiving new network device software and receiving an option to wait a predetermined period of time for confirmation of installation of the new network device software. The method may include determining, based on the option, whether the confirmation of installation of the new network device software is received prior to expiration of the predetermined period of time. The method may include selectively performing an automatic rollback to previous network device software based on failing to receive the confirmation of installation of the new network device software prior to expiration of the predetermined period of time, or utilizing the new network device software based on receiving the confirmation of installation of the new network device software prior to expiration of the predetermined period of time.

Some implementations described herein relate to a network device. The network device may include one or more memories and one or more processors. The one or more processors may be configured to receive new network device software and receive an instruction to wait a predetermined period of time for confirmation of installation of the new network device software. The one or more processors may be configured to determine, based on the instruction, whether the confirmation of installation of the new network device software is received prior to expiration of the predetermined period of time. The one or more processors may be configured to selectively perform an automatic rollback to previous network device software based on failing to receive the confirmation of installation of the new network device software prior to expiration of the predetermined period of time, or utilize the new network device software based on receiving the confirmation of installation of the new network device software prior to expiration of the predetermined period of time.

Some implementations described herein relate to a non-transitory computer-readable medium that stores a set of instructions. The set of instructions, when executed by one or more processors of a network device, may cause the network device to receive new network operating system software and receive an option to wait a predetermined period of time for confirmation of installation of the new network operating system software. The set of instructions, when executed by one or more processors of the network device, may cause the network device to determine, based on the option, whether the confirmation of installation of the new network operating system software is received prior to expiration of the predetermined period of time. The set of instructions, when executed by one or more processors of the network device, may cause the network device to selectively perform an automatic rollback to previous network operating system software based on failing to receive the confirmation of installation of the new network operating system software prior to expiration of the predetermined period of time, or utilize the new network operating system software based on receiving the confirmation of installation of the new network operating system software prior to expiration of the predetermined period of time.

### BRIEF DESCRIPTION OF THE DRAWINGS

Figs. 1A-1D are diagrams of an example associated with confirming installation of new network device software for a network device.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for confirming installation of new network device software for a network device.

### DETAILED DESCRIPTION

The following detailed description of example implementations refers to the accompanying drawings. The same reference numbers in different drawings may identify the same or similar elements.

Checks of configuration schema may be introduced for newer versions of a network operating system. Some of these checks may be safe and backward compatible. However, sometimes checks may be introduced in new versions of a network operating system that are not backward compatible with an active configuration of a network device. The network operating system may provide an option to validate the active configuration of the network device with a user interface option (e.g., a validate option). Often customers assume that the network operating system always provides backward compatibility and skip validation of the active configuration of the network device when upgrading to a new configuration of the network operating system. However, when the network operating system is activated with the new configuration of the network operating system, and the configuration of the network device is not compatible with the new configuration of the network operating system, the network device may be unable to activate the new configuration. Due to this, the network device may be unreachable via network address connectivity, and if serial access is also disabled (e.g., for security reasons), then it may be impossible to recover the network device. Such a situation may be referred to as an "amnesiac mode" (e.g., a network device is activated with no host name).

Thus, current techniques for upgrading a configuration of a network operating system of a network device consume computing resources (e.g., processing resources, memory resources, communication resources, and/or the like), networking resources, and/or the like, associated with failing to connect with the network device, losing traffic associated with the network device, failing to process traffic with the network device, attempting to locate and correct the network device, and/or the like.

Some implementations described herein relate to a network device that confirms installation of new network device software for the network device. For example, a network device may receive new network device software and may receive an option to wait a predetermined period of time for confirmation of installation of the new network device software. The network device may determine, based on the option, whether the confirmation of installation of the new network device software is received prior to expiration of the predetermined period of time. The network device may perform an automatic rollback to previous network device software when the network device fails to receive the confirmation of installation of the new network device software prior to expiration of the predetermined period of time. Alternatively, the network device may utilize the new network device software when the network device receives the confirmation of installation of the new network device software prior to expiration of the predetermined period of time.

In this way, the network device confirms installation of new network device software for the network device. For example, the network device may enable a user interface option for a confirmed timeout. When the option is enabled, the network device may wait a predetermined period of time (e.g., the confirmed timeout) before installing new network device software for a network operating system of the network device. If a user of fails to confirm the installation of the new network device software within the predetermined period of time, the network device may automatically rollback to previous network device software for the network operating system of the network device. Thus, the network device conserves computing resources, networking resources, and/or the like that would otherwise have been consumed by failing to connect with the network device, losing traffic associated with the network device, failing to process traffic with the network device, attempting to locate and correct the network device, and/or the like.

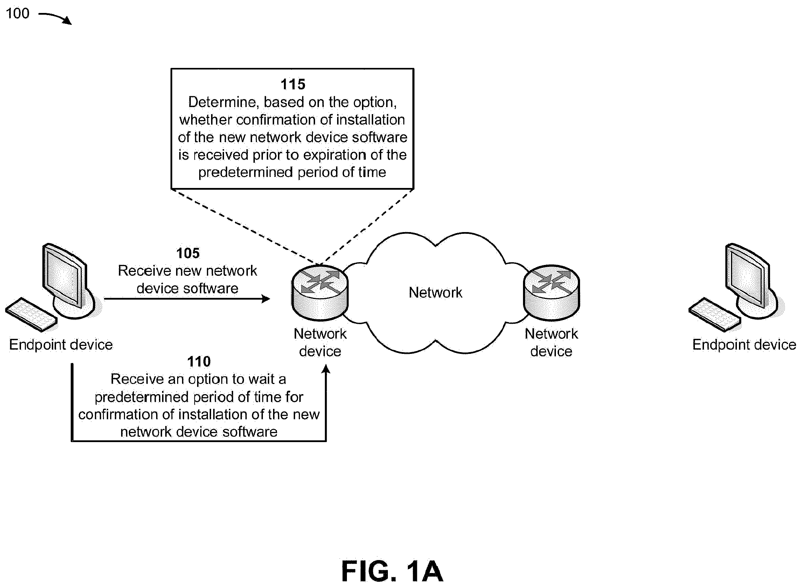

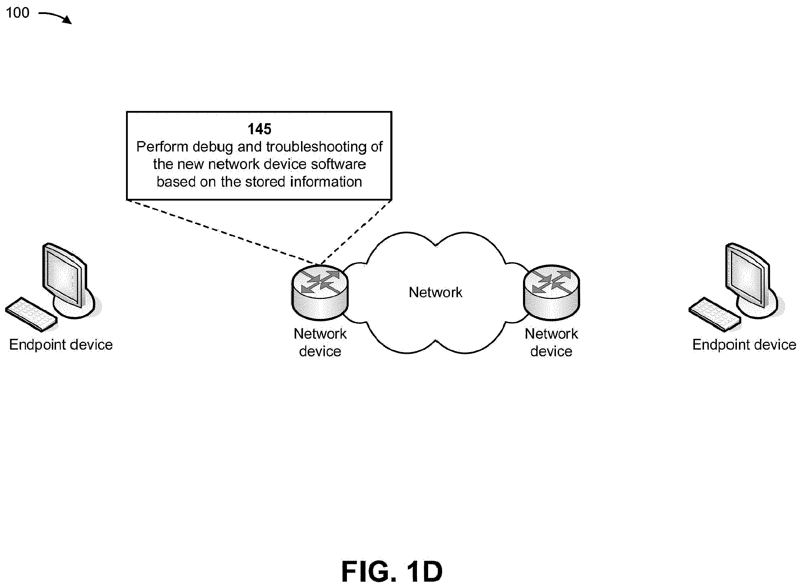

Figs. 1A-1D are diagrams of an example 100 associated with confirming installation of new network device software for a network device. As shown in Figs. 1A-1D, example 100 includes one or more endpoint devices and a network with a plurality of network devices. Further details of the endpoint devices, the network, and the network devices are provided elsewhere herein.

As shown in Fig. 1A, and by reference number 105, a network device may receive new network device software. For example, an endpoint device may provide the new network device software to the network device, and the network device may receive the new network device software from the endpoint device. In some implementations, the network device may receive the new network device software from another device, such as a server device, a network management system, a cloud-based device, and/or the like. In some implementations, the new network device software may be received by the network device via various user interfaces, such as a command line interface (CLI), a remote procedure call (RPC) mechanism (e.g., an extensible markup language (XML) RPC mechanism), and/or the like. The new network device software may include new network operating system software for the network device, an upgrade of previous or existing network operating system software for the network device, a downgrade of the previous network operating system software, and/or the like.

As further shown in Fig. 1A, and by reference number 110, the network device may receive an option to wait a predetermined period of time for confirmation of installation of the new network device software. For example, the endpoint device may provide the option to wait a predetermined period of time for confirmation of installation of the new network device software to the network device, and the network device may receive the option from the endpoint device. In some implementations, the network device may receive the option from another device, such as a server device, a network management system, a cloud-based device, and/or the like. In some implementations, the option may be received by the network device via various user interfaces, such as a CLI, an RPC mechanism (e.g., XML RPC mechanism), and/or the like. In one example, the option may include syntax, such as "*network device*> *request system software add pkg. tgz no-validate reboot confirmed-timeout ten minutes*."

The option may be referred to as a confirmed timeout option, and, when enabled, the network device may wait a predetermined period of time (e.g., the confirmed timeout in seconds, minutes, and/or the like) before installing the new network device software for a network operating system of the network device. If confirmation of installation of the new network device software is received (e.g., from the endpoint device) prior to expiration of the predetermined period of time, the network device may install the new network device software. Alternatively, if confirmation of installation of the new network device software is not received prior to expiration of the predetermined period of time, the network device may not install the new network device software.

As further shown in Fig. 1A, and by reference number 115, the network device may determine, based on the option, whether confirmation of installation of the new network device software is received prior to expiration of the predetermined period of time. For example, the option may cause the network device to wait the predetermined period of time for confirmation of installation of the new network device software. The option may also cause the network device to determine whether confirmation of installation of the new network device software is received prior to expiration of the predetermined period of time. In some implementations, the network device may receive the confirmation and may determine that confirmation of installation of the new network device software is received prior to expiration of the predetermined period of time. Alternatively, the network device may not receive the confirmation or may receive the confirmation after expiration of the period of time. In such instances, the network device may determine that network device failed to receive the confirmation of installation of the new network device software prior to expiration of the predetermined period of time.

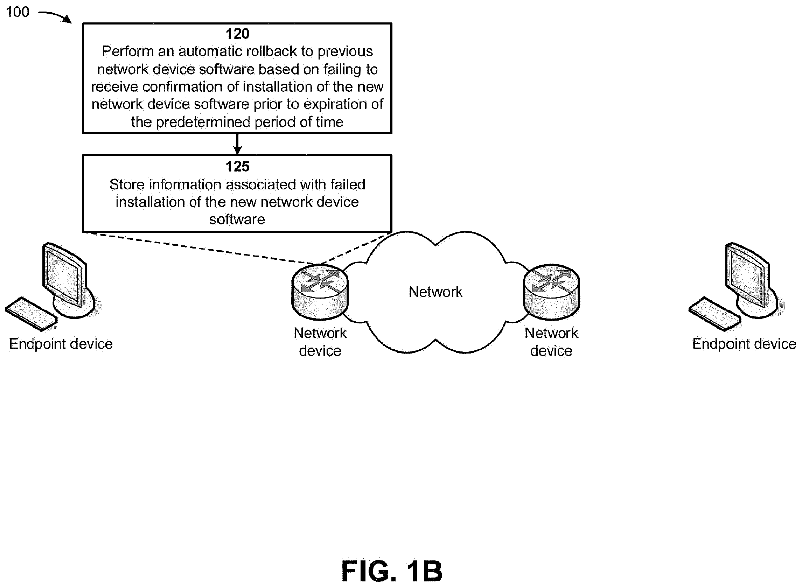

As shown in Fig. 1B, and by reference number 120, the network device may perform an automatic rollback to previous network device software based on failing to receive confirmation of installation of the new network device software prior to expiration of the predetermined period of time. For example, when the network device fails to receive the confirmation of installation of the new network device software prior to expiration of the predetermined period of time, the network device may perform the automatic rollback to the previous or existing network device software. In some implementations, the previous network device software may include previous or existing network operating system software for the network device. In one example, the network device may wait the period of time (e.g., ten minutes) before installing the new network device software. Within the period of time, if a user (e.g., the endpoint device) has not confirmed the installation of the new network device software, the network device will automatically rollback to the previous network device software.

Applying the automatic rollback to the "amnesiac mode" problem described above, since the network device is not reachable (e.g., via network connectivity) during installation of the new network device software, a user will not be able to confirm the installation of the new network device software. Therefore, after expiration of the period of time, the network device may perform the automatic rollback to the previous network device software. Once the previous network device software is rolled back, the network device may be reachable (e.g., via network connectivity).

As further shown in Fig. 1B, and by reference number 125, the network device may store information associated with failed installation of the new network device software. For example, when the network device performs the automatic rollback to the previous network device software and fails to install the new network device software, the network device may store information associated with the failed installation of the new network device software in a data structure (e.g., a database, a table, a list, and/or the like) associated with the network device. In this way, the network device may store information that may be utilized to correct the new network device software so that the new network device software may be correctly installed on the network device.

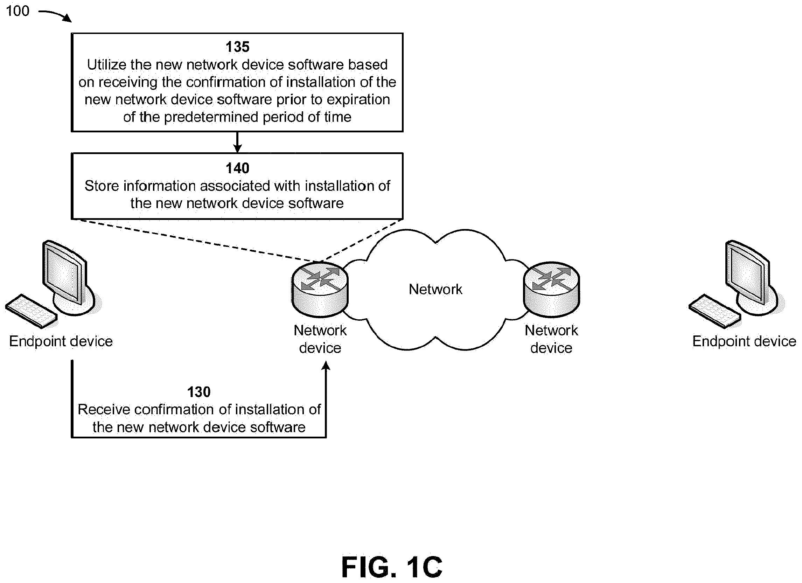

As shown in Fig. 1C, and by reference number 130, the network device may receive the confirmation of installation of the new network device software. For example, when the network device is reachable after installation of the new network device software (e.g., the new network device software is compatible with an active configuration of the network device), the network device may receive the confirmation of installation of the new network device software. In some implementations, the endpoint device (e.g., or another device, such as a server device, a network management system, a cloud-based device, and/or the like) may provide the confirmation of installation of the new network device software to the network device, and the network device may receive the confirmation. When the network device receives the confirmation of installation of the new network device software prior to expiration of the predetermined period of time, the network device may maintain the new network device software in place of the previous network device software. In some implementations, the confirmation may be received by the network device via various user interfaces, such as a CLI, an RPC mechanism (e.g., XML RPC mechanism), and/or the like. In one example, the confirmation may include syntax, such as "*network device*> *request system software add confirmed*."

As further shown in Fig. 1C, and by reference number 135, the network device may utilize the new network device software based on receiving the confirmation of installation of the new network device software prior to expiration of the predetermined period of time. For example, when the network device receives the confirmation of installation of the new network device software prior to expiration of the predetermined period of time, the network device may utilize the new network device software. In some implementations, the network device may utilize the new network device software to receive, process, transmit, and/or the like network traffic associated with the endpoint devices and/or the network.

As further shown in Fig. 1C, and by reference number 140, the network device may store information associated with installation of the new network device software. For example, when the network device maintains and/or utilizes the new network device software, the network device may store information associated with the installation of the new network device software in the data structure associated with the network device. In this way, the network device may store information that may be utilized to analyze the installation of the new network device software so that the new network device software may be correctly installed on other network devices.

As shown in Fig. ID, and by reference number 145, the network device may perform debug and troubleshooting of the new network device software based on the stored information. For example, when the network device performs the automatic rollback to the previous network device software and fails to install the new network device software, the network device may store first information associated with the failed installation of the new network device software. Alternatively, when the network device maintains and/or utilizes the new network device software, the network device may store second information associated with the installation of the new network device software. In some implementations, the network device may perform debug and troubleshooting of the new network device software based on the first information or the second information. For example, the network device may utilize the first information for troubleshooting the new network device software and for debugging the new network device software to understand why the network device failed to install the new network device software. The network device may utilize the second information to analyze the installation of the new network device software so that the new network device software may be correctly installed on other network devices.

In this way, the network device confirms installation of new network device software for the network device. For example, the network device may enable a user interface option for a confirmed timeout. When the option is enabled, the network device may wait a predetermined period of time (e.g., the confirmed timeout) before installing new network device software for a network operating system of the network device. If a user of fails to confirm the installation of the new network device software within the predetermined period of time, the network device may automatically rollback to previous network device software for the network operating system of the network device. Thus, the network device conserves computing resources, networking resources, and/or the like that would otherwise have been consumed by failing to connect with the network device, losing traffic associated with the network device, failing to process traffic with the network device, attempting to locate and correct the network device, and/or the like.

As indicated above, Figs. 1A-1D are provided as an example. Other examples may differ from what is described with regard to Figs. 1A-1D. The number and arrangement of devices shown in Figs. 1A-1D are provided as an example. In practice, there may be additional devices, fewer devices, different devices, or differently arranged devices than those shown in Figs. 1A-1D. Furthermore, two or more devices shown in Figs. 1A-1D may be implemented within a single device, or a single device shown in Figs. 1A-1D may be implemented as multiple, distributed devices. Additionally, or alternatively, a set of devices (e.g., one or more devices) shown in Figs. 1A-1D may perform one or more functions described as being performed by another set of devices shown in Figs. 1A-1D.

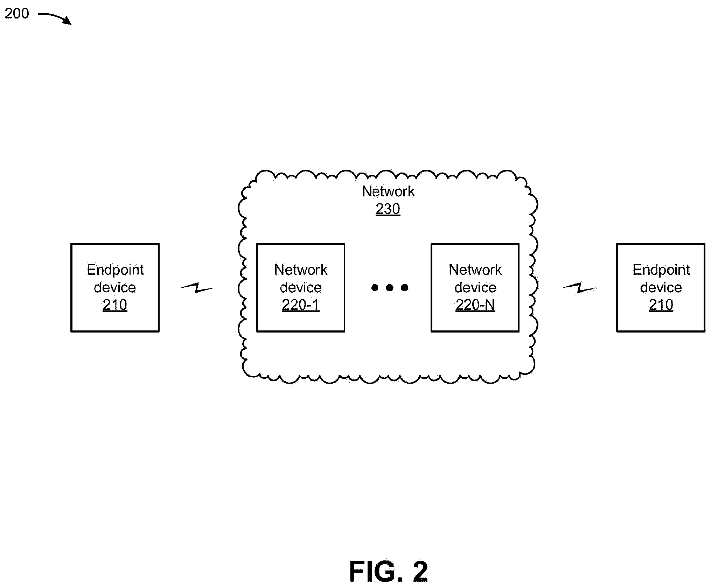

Fig. 2 is a diagram of an example environment 200 in which systems and/or methods described herein may be implemented. As shown in Fig. 2, environment 200 may include endpoint devices 210, a group of network devices 220 (shown as network device 220-1 through network device 220-N), and a network 230. Devices of the environment 200 may interconnect via wired connections, wireless connections, or a combination of wired and wireless connections.

The endpoint device 210 includes one or more devices capable of receiving, generating, storing, processing, and/or providing information, such as information described herein. For example, the endpoint device 210 may include a mobile phone (e.g., a smart phone or a radiotelephone), a set-top box, a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device (e.g., a router, a residential gateway, and/or the like), or a similar type of device. In some implementations, the endpoint device 210 may receive network traffic from and/or may provide network traffic to other endpoint devices 210, via the network 230 (e.g., by routing packets using the network devices 220 as intermediaries).

The network device 220 includes one or more devices capable of receiving, processing, storing, routing, and/or providing traffic (e.g., a packet or other information or metadata) in a manner described herein. For example, the network device 220 may include a router, such as a label switching router (LSR), a label edge router (LER), an ingress router, an egress router, a provider router (e.g., a provider edge router or a provider core router), a virtual router, a route reflector, an area border router, or another type of router. Additionally, or alternatively, the network device 220 may include a gateway, a switch, a firewall, a hub, a bridge, a reverse proxy, a server (e.g., a proxy server, a cloud server, or a data center server), a load balancer, and/or a similar device. In some implementations, the network device 220 may be a physical device implemented within a housing, such as a chassis. In some implementations, the network device 220 may be a virtual device implemented by one or more computer devices of a cloud computing environment or a data center. In some implementations, a group of network devices 220 may be a group of data center nodes that are used to route traffic flow through the network 230.

The network 230 includes one or more wired and/or wireless networks. For example, the network 230 may include a packet switched network, a cellular network (e.g., a fifth generation (5G) network, a fourth generation (4G) network, such as a long-term evolution (LTE) network, and/or a third generation (3G) network), a code division multiple access (CDMA) network, a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

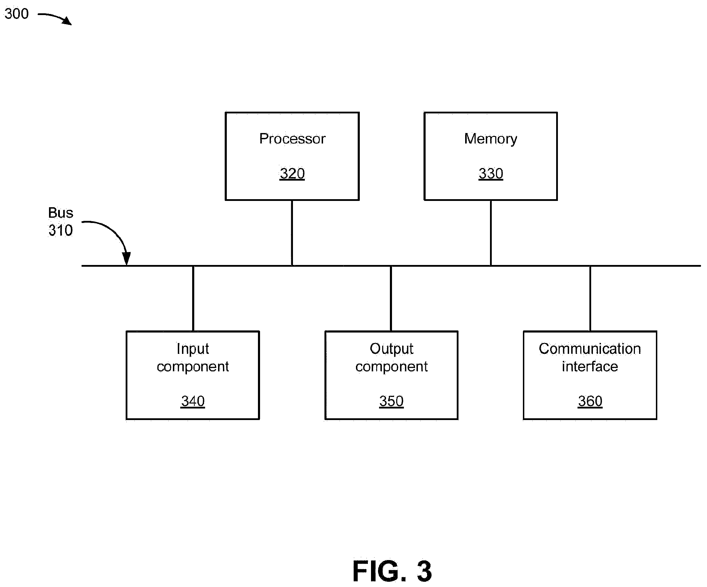

Fig. 3 is a diagram of example components of one or more devices of Fig. 2. The example components may be included in a device 300, which may correspond to the endpoint device 210 and/or the network device 220. In some implementations, the endpoint device 210 and/or the network device 220 may include one or more devices 300 and/or one or more components of the device 300. As shown in Fig. 3, the device 300 may include a bus 310, a processor 320, a memory 330, an input component 340, an output component 350, and a communication interface 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), a microprocessor, a controller, a microcontroller, a digital signal processor (DSP), a field-programmable gate array (FGPA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication interface 360 enables the device 300 to communicate with other devices via a wired connection and/or a wireless connection. For example, the communication interface 360 may include a receiver, a transmitter, a transceiver, a modem, a network interface card, and/or an antenna.

The device 300 may perform one or more operations or processes described herein. For example, a non-transitory computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

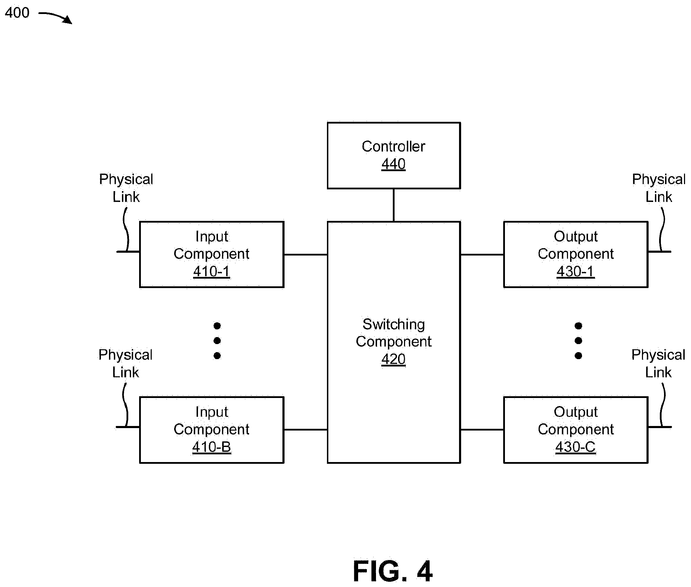

Fig. 4 is a diagram of example components of one or more devices of Fig. 2. The example components may be included in a device 400. The device 400 may correspond to the network device 220. In some implementations, the network device 220 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an accelerated processing unit (APU), a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions stored by a non-transitory computer-readable medium. A computer-readable medium is defined herein as a non-transitory memory device. A memory device includes memory space within a single physical storage device or memory space spread across multiple physical storage devices.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

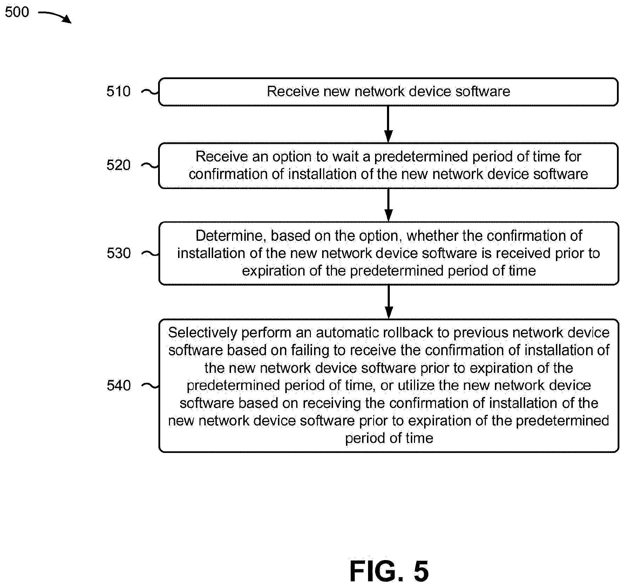

Fig. 5 is a flowchart of an example process 500 for confirming installation of new network device software for a network device. In some implementations, one or more process blocks of Fig. 5 may be performed by a network device (e.g., the network device 220). In some implementations, one or more process blocks of Fig. 5 may be performed by another device or a group of devices separate from or including the network device, such as an endpoint device (e.g., the endpoint device 210). Additionally, or alternatively, one or more process blocks of Fig. 5 may be performed by one or more components of the device 300, such as the processor 320, the memory 330, the input component 340, the output component 350, and/or the communication interface 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include receiving new network device software (block 510). For example, the network device may receive new network device software, as described above. In some implementations, the new network device software is new network operating system software for the network device.

As further shown in Fig. 5, process 500 may include receiving an option to wait a predetermined period of time for confirmation of installation of the new network device software (block 520). For example, the network device may receive an option to wait a predetermined period of time for confirmation of installation of the new network device software, as described above. In some implementations, receiving the option to wait the predetermined period of time for the confirmation of installation of the new network device software includes receiving the option via one of a command line interface or a remote procedure call mechanism. In some implementations, the network device is not reachable during installation of the new network device software.

As further shown in Fig. 5, process 500 may include determining, based on the option, whether the confirmation of installation of the new network device software is received prior to expiration of the predetermined period of time (block 530). For example, the network device may determine, based on the option, whether the confirmation of installation of the new network device software is received prior to expiration of the predetermined period of time, as described above.

As further shown in Fig. 5, process 500 may include selectively performing an automatic rollback to previous network device software based on failing to receive the confirmation of installation of the new network device software prior to expiration of the predetermined period of time, or utilizing the new network device software based on receiving the confirmation of installation of the new network device software prior to expiration of the predetermined period of time (block 540). For example, the network device may selectively perform an automatic rollback to previous network device software based on failing to receive the confirmation of installation of the new network device software prior to expiration of the predetermined period of time, or utilize the new network device software based on receiving the confirmation of installation of the new network device software prior to expiration of the predetermined period of time, as described above. In some implementations, the previous network device software is previous network operating system software for the network device.

In some implementations, performing the automatic rollback to the previous network device software based on failing to receive the confirmation of installation of the new network device software prior to expiration of the predetermined period of time includes failing to receive the confirmation based on the network device not being reachable after installation of the new network device software, and performing the automatic rollback to the previous network device software based on failing to receive the confirmation.

In some implementations, utilizing the new network device software includes receiving the confirmation of installation of the new network device software prior to expiration of the predetermined period of time, and utilizing the new network device software based on receiving the confirmation of installation of the new network device software prior to expiration of the predetermined period of time. In some implementations, receiving the confirmation of installation of the new network device software prior to expiration of the predetermined period of time includes receiving the confirmation via one of a command line interface or a remote procedure call mechanism.

In some implementations, utilizing the new network device software includes receiving the confirmation of installation of the new network device software prior to expiration of the predetermined period of time based on the network device being reachable after installation of the new network device software, and utilizing the new network device software based on receiving the confirmation.

In some implementations, process 500 includes storing information associated with failed installation of the new network device software. In some implementations, process 500 includes storing information associated with installation of the new network device software. In some implementations, process 500 includes performing debug and troubleshooting of the new network device software based on the stored information.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description but is not intended to be exhaustive or to limit the implementations to the precise form disclosed. Modifications may be made in light of the above disclosure or may be acquired from practice of the implementations.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Thus, from one perspective, there has now been described a network device may receive new network device software and may receive an option to wait a predetermined period of time for confirmation of installation of the new network device software. The network device may determine, based on the option, whether the confirmation of installation of the new network device software is received prior to expiration of the predetermined period of time. The network device may selectively perform an automatic rollback to previous network device software based on failing to receive the confirmation of installation of the new network device software prior to expiration of the predetermined period of time, or utilize the new network device software based on receiving the confirmation of installation of the new network device software prior to expiration of the predetermined period of time.

Further examples of feature combinations taught by the present disclosure are set out in the following numbered clauses:
1. A method, comprising:
   receiving, by a network device, new network device software;
   receiving, by the network device, an option to wait a predetermined period of time for confirmation of installation of the new network device software;
   determining, by the network device and based on the option, whether the confirmation of installation of the new network device software is received prior to expiration of the predetermined period of time; and
   selectively:
      performing, by the network device, an automatic rollback to previous network device software based on failing to receive the confirmation of installation of the new network device software prior to expiration of the predetermined period of time; or
      utilizing, by the network device, the new network device software based on receiving the confirmation of installation of the new network device software prior to expiration of the predetermined period of time.
2. The method of clause 1, further comprising:
   storing information associated with failed installation of the new network device software.
3. The method of clause 2, further comprising:
   performing debug and troubleshooting of the new network device software based on the stored information.
4. The method of any preceding clause, wherein utilizing the new network device software comprises:
   receiving the confirmation of installation of the new network device software prior to expiration of the predetermined period of time; and
   utilizing the new network device software based on receiving the confirmation of installation of the new network device software prior to expiration of the predetermined period of time.
5. The method of clause 4, wherein receiving the confirmation of installation of the new network device software prior to expiration of the predetermined period of time comprises:
   receiving the confirmation via one of a command line interface or a remote procedure call mechanism.
6. The method of any preceding clause, further comprising:
   storing information associated with installation of the new network device software.
7. The method of clause 6, further comprising:
   performing debug and troubleshooting of the new network device software based on the stored information.
8. A network device, comprising:
   one or more memories; and
   one or more processors to:
      receive new network device software;
      receive an instruction to wait a predetermined period of time for confirmation of installation of the new network device software;
      determine, based on the instruction, whether the confirmation of installation of the new network device software is received prior to expiration of the predetermined period of time; and
      selectively:
         perform an automatic rollback to previous network device software based on failing to receive the confirmation of installation of the new network device software prior to expiration of the predetermined period of time; or
         utilize the new network device software based on receiving the confirmation of installation of the new network device software prior to expiration of the predetermined period of time.
9. The network device of clause 8, wherein the one or more processors, to receive the instruction to wait the predetermined period of time for the confirmation of installation of the new network device software, are to:
   receive the instruction via one of a command line interface or a remote procedure call mechanism.
10. The network device of clause 8 or 9, wherein the network device is not reachable during installation of the new network device software.
11. The network device of any of clauses 8 to 10, wherein the new network device software is new network operating system software for the network device.
12. The network device of any of clauses 8 to 11, wherein the previous network device software is previous network operating system software for the network device.
13. The network device of any of clauses 8 to 12, wherein the one or more processors, to perform the automatic rollback to the previous network device software based on failing to receive the confirmation of installation of the new network device software prior to expiration of the predetermined period of time, are to:
   fail to receive the confirmation based on the network device not being reachable after installation of the new network device software; and
   perform the automatic rollback to the previous network device software based on failing to receive the confirmation.
14. The network device of any of clauses 8 to 13, wherein the one or more processors, to utilize the new network device software, are to:
   receive the confirmation of installation of the new network device software prior to expiration of the predetermined period of time based on the network device being reachable after installation of the new network device software; and
   utilize the new network device software based on receiving the confirmation.
15. A computer-readable medium comprising instructions that, when executed by one or more processors of a network device, cause the network device to:
   receive new network operating system software;
   receive an option to wait a predetermined period of time for confirmation of installation of the new network operating system software;
   determine, based on the option, whether the confirmation of installation of the new network operating system software is received prior to expiration of the predetermined period of time; and
   selectively:
      perform an automatic rollback to previous network operating system software based on failing to receive the confirmation of installation of the new network operating system software prior to expiration of the predetermined period of time; or
      utilize the new network operating system software based on receiving the confirmation of installation of the new network operating system software prior to expiration of the predetermined period of time.
16. The computer-readable medium of clauses 15, wherein the one or more instructions further cause the network device to:
   store one of first information associated with failed installation of the new network operating system software or second information associated with installation of the new network operating system software.
17. The computer-readable medium of clause 16, wherein the one or more instructions further cause the network device to:
   perform debug and troubleshooting of the new network operating system software based on the first information or the second information.
18. The computer-readable medium of any of clauses 15 to 17, wherein the one or more instructions, that cause the network device to utilize the new network operating system software, cause the network device to:
   receive the confirmation of installation of the new network operating system software prior to expiration of the predetermined period of time; and
   utilize the new network operating system software based on receiving the confirmation of installation of the new network operating system software prior to expiration of the predetermined period of time.
19. The computer-readable medium of clause 18, wherein the one or more instructions, that cause the network device to receive the confirmation of installation of the new network operating system software prior to expiration of the predetermined period of time, cause the network device to:
   receive the confirmation via one of a command line interface or a remote procedure call mechanism.
20. The computer-readable medium of any of clauses 15 to 19, wherein the one or more instructions, that cause the network device to receive the option to wait the predetermined period of time for the confirmation of installation of the new network operating system software, cause the network device to:
   receive the option via one of a command line interface or a remote procedure call mechanism.

## Claims

1. A method, comprising:
receiving, by a network device, new network device software;
receiving, by the network device, an option to wait a predetermined period of time for confirmation of installation of the new network device software;
determining, by the network device and based on the option, whether the confirmation of installation of the new network device software is received prior to expiration of the predetermined period of time; and
selectively:
performing, by the network device, an automatic rollback to previous network device software based on failing to receive the confirmation of installation of the new network device software prior to expiration of the predetermined period of time; or
utilizing, by the network device, the new network device software based on receiving the confirmation of installation of the new network device software prior to expiration of the predetermined period of time.

2. The method of claim 1, further comprising:
storing information associated with failed installation of the new network device software.

3. The method of claim 2, further comprising:
performing debug and troubleshooting of the new network device software based on the stored information.

4. The method of any preceding claim, wherein utilizing the new network device software comprises:
receiving the confirmation of installation of the new network device software prior to expiration of the predetermined period of time; and
utilizing the new network device software based on receiving the confirmation of installation of the new network device software prior to expiration of the predetermined period of time.

5. The method of claim 4, wherein receiving the confirmation of installation of the new network device software prior to expiration of the predetermined period of time comprises:
receiving the confirmation via one of a command line interface or a remote procedure call mechanism.

6. The method of any preceding claim, further comprising:
storing information associated with installation of the new network device software.

7. The method of claim 6, further comprising:
performing debug and troubleshooting of the new network device software based on the stored information.

8. A network device, comprising:
one or more memories; and
one or more processors to:
receive new network device software;
receive an instruction to wait a predetermined period of time for confirmation of installation of the new network device software;
determine, based on the instruction, whether the confirmation of installation of the new network device software is received prior to expiration of the predetermined period of time; and
selectively:
perform an automatic rollback to previous network device software based on failing to receive the confirmation of installation of the new network device software prior to expiration of the predetermined period of time; or
utilize the new network device software based on receiving the confirmation of installation of the new network device software prior to expiration of the predetermined period of time.

9. The network device of claim 8, wherein the one or more processors, to receive the instruction to wait the predetermined period of time for the confirmation of installation of the new network device software, are to:
receive the instruction via one of a command line interface or a remote procedure call mechanism.

10. The network device of claim 8 or 9, wherein the network device is not reachable during installation of the new network device software.

11. The network device of any of claims 8 to 10, wherein the new network device software is new network operating system software for the network device.

12. The network device of any of claims 8 to 11, wherein the previous network device software is previous network operating system software for the network device.

13. The network device of any of claims 8 to 12, wherein the one or more processors, to perform the automatic rollback to the previous network device software based on failing to receive the confirmation of installation of the new network device software prior to expiration of the predetermined period of time, are to:
fail to receive the confirmation based on the network device not being reachable after installation of the new network device software; and
perform the automatic rollback to the previous network device software based on failing to receive the confirmation.

14. The network device of any of claims 8 to 13, wherein the one or more processors, to utilize the new network device software, are to:
receive the confirmation of installation of the new network device software prior to expiration of the predetermined period of time based on the network device being reachable after installation of the new network device software; and
utilize the new network device software based on receiving the confirmation.

15. A computer-readable medium comprising instructions that, when executed by one or more processors of a network device, cause the network device to:
receive new network operating system software;
receive an option to wait a predetermined period of time for confirmation of installation of the new network operating system software;
determine, based on the option, whether the confirmation of installation of the new network operating system software is received prior to expiration of the predetermined period of time; and
selectively:
perform an automatic rollback to previous network operating system software based on failing to receive the confirmation of installation of the new network operating system software prior to expiration of the predetermined period of time; or
utilize the new network operating system software based on receiving the confirmation of installation of the new network operating system software prior to expiration of the predetermined period of time.
